# EUROPÄISCHE PATENTSCHRIFT

(11) **EP 2 646 189 B1**
(45) Veröffentlichungstag und Bekanntmachung des Hinweises auf die Patenterteilung: **22.04.2015**
(21) Anmeldenummer: 11787834.8
(22) Anmeldetag: 17.11.2011
(51) Int. Cl.: B23D 55/08, B23D 59/00

(54) **BANDSÄGE**
BAND SAW
SCIE À RUBAN

(30) Priorität: 29.11.2010 DE 102010052633
(43) Veröffentlichungstag der Anmeldung: 09.10.2013
(73) Patentinhaber: Gebrüder Linck Maschinenfabrik "Gatterlinck" GmbH & Co. KG, 77704 Oberkirch (DE)
(72) Erfinder: DIETZ, Hans, 72119 Ammerbuch (DE); SEYBOLDT, Konrad, 72070 Tuebingen (DE)
(74) Vertreter: Witte, Weller & Partner Patentanwälte mbB
(86) Internationale Anmeldenummer: PCT/EP2011/070360
(87) Internationale Veröffentlichungsnummer: WO 2012/072422

(56) Entgegenhaltungen:
- EP-A1- 0 447 772
- DE-A1-102008 018 443
- DE-A1-102008 044 669
- US-A- 425 105
- US-A- 3 557 848
- US-A1- 2006 174 497

## Beschreibung

Die Erfindung betrifft eine Bandsäge zum Aufteilen von Baumstämmen in Holzerzeugnisse oder zum Zersägen derartiger Holzerzeugnisse, mit einem Bandsägeblatt und einer Führung für das Bandsägeblatt, bei der mindestens zwei magnetische Führungselemente das Bandsägeblatt in einem Zwischenraum zwischen sich einschließen und mit jeweils an den Führungselementen angeordneten und am Bandsägeblatt anliegenden Abstreifern.

Eine Bandsäge der vorstehend genannten Art ist aus dem Dokument DE 10 2008 018 443 A1 bekannt.

Aus dem Dokument DE 10 2008 044 669 A1 ist eine Führung für ein Bandsägeblatt bekannt. Die bekannte Führung weist seitliche Führungsplatten für das Bandsägeblatt auf, die mit zur Laufrichtung des Bandsägeblatts geneigten Stegen versehen ist. Zwischen die Stege kann eine Kühlflüssigkeit eingeleitet werden, die auch zum Ausschwemmen von Sägespänen dient. Die Führungsplatten sind in eine raumfeste Halterung eingelötet, bilden also für das Bandsägeblatt einen Spalt mit konstanter Breite.

Eine weitere Anordnung ist in dem Dokument DE 10 2006 037 705 A1 beschrieben. Dort wird für die seitliche Führung eines Bandsägeblatts ein U-förmiger Grundkörper verwendet, zwischen dessen Schenkeln das Bandsägeblatt läuft. Zwischen den Schenkeln wird ein Flüssigkeitspolster ausgebildet. Das Dokument DE 38 31 501 beschreibt eine Führungsanordnung ähnlicher Bauart mit U-förmigem Führungskörper.

Das Dokument DE 30 04 091 C2 beschreibt eine Sägebandführungseinrichtung für eine Bandsäge zum Sägen von schwer schneidbaren Werkstücken mit hoher Vorschubkraft, also von Werkstücken aus Metall, Keramik oder dgl., die mittels einer Spannvorrichtung mit Spannbacken auf einem Werkstücktisch fixiert sind. Bei dieser Einrichtung wird das Bandsägeblatt seitlich zwischen zwei raumfest verschraubten, also im konstanten Abstand zueinander befindlichen Führungsteilen geführt. Zum Stützen des Rückens des Bandsägeblatts ist ein Block vorgesehen, dessen Vorderseite über eine Hartmetallplatte permanent am Bandsägeblattrücken anliegt, während die Rückseite über ein federnd nachgiebiges Element raumfest abgestützt ist. Die rückseitige Abstützung dient zum Abfangen der erwähnten hohen Vorschubkraft, die beim Sägen von Metall und dgl. erforderlich ist. Die Abstützung ist notwendig, weil ansonsten die Gefahr bestünde, dass das Bandsägeblatt von den sie tragenden und antreibenden Rollen abspringt. Derartige Metallsägen sind im Vergleich zu Bandsägen in Sägewerken relativ klein und werden mit verhältnismäßig geringen Bandgeschwindigkeiten in der Größenordnung von weniger als 5 m/s betrieben. Diese niedrigen Geschwindigkeiten führen nicht zu hoher Reibungswärme an der rückseitigen Abstützung. Aber selbst wenn eine nicht unerhebliche Erwärmung entstünde, wäre dies für den Betrieb einer Metallbandsäge unerheblich, weil eine derartige Säge ohnehin mit einer Kühleinrichtung versehen ist, die - vorzugsweise mittels eines flüssigen Kühlmittels - den Bereich der Spanerzeugung kühlt. Eine solche Problematik liegt bei Bandsägen in Sägewerken nicht vor.

Das Dokument US 3 104 576 beschreibt eine ähnliche Führungsvorrichtung.

Bei der aus dem eingangs genannten Dokument DE 10 2008 018 443 A1 bekannten Bandsäge wird das Bandsägeblatt in vertikaler Richtung durch einen Zwischenraum zwischen zwei dicht nebeneinander angeordneten Magnetführungen hindurchgeführt. Da beim Sägen erhebliche Mengen von Spänen erzeugt werden, typischerweise Holzspäne, gelangen diese Späne in den Zwischenraum zwischen den Magnetführungen, die sich unterhalb des Sägetischs befinden. Weil dieser Zwischenraum zur optimalen Führung des Bandsägeblatts als schmaler Luftspalt ausgebildet werden muss, um den Abstand zwischen den Magneten der Magnetführungen und dem Bandsägeblatt so gering wie möglich zu halten, kann der Fall eintreten, dass die anfallenden Späne diesen Zwischenraum verstopfen und damit zu einem Abbremsen oder gar einem erzwungenen Stillstand des Bandsägeblatts führen. Auch die Genauigkeit der Führung, insbesondere die Geradlinigkeit eines Schnitts, kann dadurch beeinträchtigt werden. Das Verstopfen des Zwischenraums beruht auch darauf, dass das durch den Zwischenraum laufende Bandsägeblatt in dem Zwischenraum einen Unterdruck erzeugt, durch den die Späne angesaugt werden.

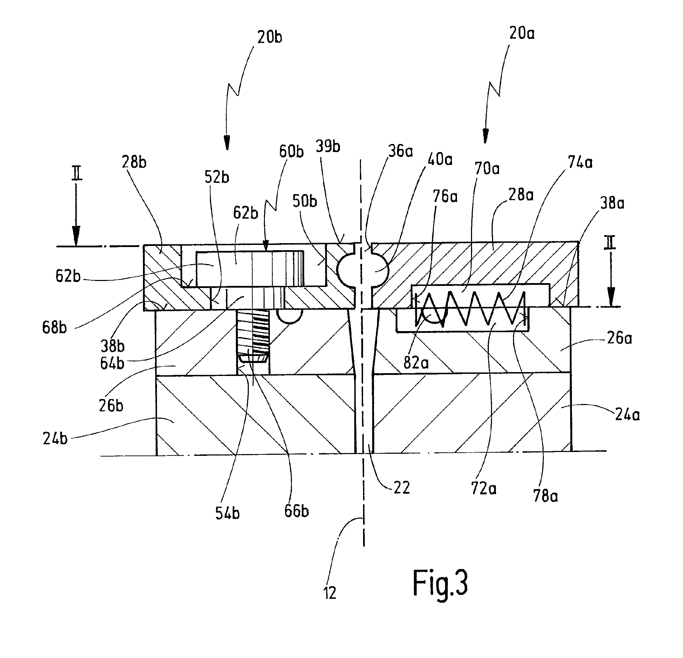

Bei dieser bekannten Bandsäge sind in einem Ausführungsbeispiel (Figur 3) auf der Oberseite der beidseits des Bandsägeblatts angeordneten Führungselemente Platten befestigt. Auf diese Platten sind in sich elastische Abstreifer aufgeschraubt, die aus einem Kunststoff oder einem anderen verschleißfesten Werkstoff wie beispielsweise Federstahl bestehen. Die Abstreifer liegen federnd entlang einer Linie an dem Bandsägeblatt an, die parallel zur Förderrichtung eines von der Bandsäge zu sägenden Sägeguts liegt. Die Abstreifer befinden sich stromabwärts der Sägestelle und sind gegen die Laufrichtung des Bandsägeblatts gerichtet. Durch den Raum zwischen den Abstreifern und dem Bandsägeblatt wird Druckluft geleitet, und zwar von der Rückseite des Bandsägeblatts her. Die Druckluft nimmt die trotz der Abstreifwirkung in den Raum eingedrungenen Späne mit und bläst sie nach vorne, an den Zähnen des Bandsägeblatts vorbei, aus.

Bei praktischen Erprobungen dieser Ausblaseinrichtung hat sich erwissen, dass diese in mancherlei Hinsicht noch verbesserungsfähig ist.

Der Erfindung liegt daher die Aufgabe zugrunde, eine Bandsäge der eingangs genannten Art dahingehend weiterzubilden, dass diese Verbesserungen erreicht werden. Insbesondere soll die Abstreifwirkung erhöht und die Langzeitstabilität verbessert werden, sodass im praktischen Betrieb innerhalb eines Sägewerks keine Stillstände durch Verstopfen des Luftspalts zwischen den Führungselementen auftreten.

Bei einer Bandsäge der eingangs genannten Art wird diese Aufgabe erfindungsgemäß dadurch gelöst, dass die Abstreifer als Dichtleisten ausgebildet sind, die in einer Richtung quer zur Laufrichtung und quer zur Förderrichtung eines von der Bandsäge zu sägenden Sägeguts beweglich an den Führungselementen angeordnet sind.

Die der Erfindung zugrunde liegende Aufgabe wird auf diese Weise vollkommen gelöst. Die Ausbildung der Abstreifer als Dichtleiste hat den Vorteil, dass die Dichtleisten flächig an dem Bandsägeblatt anliegen und daher auch im Langzeitbetrieb eine zuverlässige Abstreifwirkung gewährleisten. Diese Erfindung hat auch den Vorteil, dass bei magnetischen Führungen, bei denen, wie eingangs bereits erwähnt, der Raum zwischen den Führungselementen als schmaler Luftspalt ausgebildet ist, auf eine besonders effektive Art und Weise erreicht wird, dass keine Späne in diesen Luftspalt gelangen.

Eine bevorzugte Weiterbildung der Erfindung zeichnet sich dadurch aus, dass an den Zwischenraum eine Ausblaseinrichtung angeschlossen ist.

Diese Maßnahme hat den Vorteil, dass eventuell von den Abstreifern nicht abgestreifte Späne, die in den Zwischenraum gelangen, dort ausgeblasen werden.

Bei einer weitern bevorzugten Ausführungsform der Erfindung sind die Dichtleisten mittels Federn elastisch zwischen den Führungselementen und dem Bandsägeblatt eingespannt.

Diese Maßnahme hat den Vorteil, dass der Anlagedruck der Dichtleisten ohne externe Fremdkraft erzeugt wird und durch Auswahl der Federkonstante der Federn, insbesondere Druckfedern, in weiten Bereichen einstellbar ist. Ferner bleibt der Anlagedruck auch im Langzeitbetrieb konstant, weil die Federn im Gegensatz zu den bekannten elastischen Abstreifern keinem Verschleiß am Bandsägeblatt unterliegen.

Weiterhin ist bevorzugt, wenn die Dichtleisten flächig und gleitend auf Oberflächen der Führungselemente aufliegen.

Diese Maßnahme hat den Vorteil, dass die Dichtleisten zuverlässig geführt werden.

Von besonderem Vorteil ist dabei, wenn die Oberflächen von mit einem Gehäuse der Führungselemente fest verbundenen Leisten gebildet werden.

Diese Maßnahme hat den Vorteil, dass die aufeinander gleitenden Oberflächen für den jeweiligen Einsatzfall optimiert werden können, ohne dass davon der Aufbau der Führungselemente betroffen ist.

Eine besonders gute Wirkung wird dabei dadurch erzielt, dass die Führungselemente mit ersten Mitteln zum Einleiten eines Druckmediums, insbesondere Druckluft, zwischen die Dichtleisten und die Oberflächen versehen sind.

Diese Maßnahme hat zum einen den Vorteil, dass die Dichtleisten auf einem Fluid- bzw. Luftkissen gelagert sind und dadurch besonders feinfühlig und reproduzierbar verfahren werden. Ferner hat die Maßnahme den Vorteil, dass keine Späne zwischen die aufeinander aufliegenden Oberflächen der Dichtleisten und des Gehäuses bzw. der Leisten gelangen können, weil das Druckmedium nicht nur als Lager sondern auch als Spülmedium dient.

In diesem Zusammenhang ist eine Ausführungsform bevorzugt, bei der die Mittel einen nach oben offenen Kanal in den Oberflächen aufweisen.

Diese Maßnahme hat den Vorteil, dass das Druckmedium gleichförmig zwischen den aufeinander aufliegenden Oberflächen verteilt werden kann.

Vorteilhaft ist dabei ferner, wenn die ersten Mittel an eine von Zähnen des Bandsägeblatts abgewandte Rückseite der Führungselemente angeschlossen sind.

Diese Maßnahme hat den Vorteil, dass der Eingriffsbereich des Bandsägeblatts in das Sägegut frei von Einbauten ist.

Eine weitere Gruppe von Ausführungsbeispielen zeichnet sich dadurch aus, dass die Dichtleisten mit flächigen Stirnseiten an dem Bandsägeblatt anliegen, dass die Stirnseiten mindestens eine in Förderrichtung verlaufende Ausnehmung aufweisen und dass zweite Mittel zum Einleiten eines Druckmediums, insbesondere Druckluft, an die Ausnehmungen vorgesehen sind.

Diese Maßnahme hat den Vorteil, dass im Gegensatz zu der bekannten Anordnung eine kompaktere Bauform entsteht, bei der ein Ausblaskanal alleine im Bereich der Stirnseite des Abstreifers vorgesehen wird, was bei der bereits erheblich verbesserten Abstreifwirkung in der Praxis ausreicht.

Auch bei diesem Druckmittelsystem ist aus den bereits genannten Gründen bevorzugt, wenn analog zu den ersten Mitteln auch die zweiten Mittel an eine von Zähnen des Bandsägeblatts abgewandte Rückseite der Führungselemente angeschlossen sind.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische, schematische Ansicht eines Ausführungsbeispiels einer erfindungsgemäßen Bandsäge;
- Figur 2: eine Draufsicht auf eine Ausblaseinrichtung, wie sie bei einer Bandsäge gemäß Figur 1 verwendet werden kann, und zwar in einer Ansicht entlang der Linie II-II von Figur 3; und
- Figur 3: eine Schnittdarstellung der Ausblaseinrichtung von Figur 2 in gegenüber Figur 2 vergrößertem Maßstab, entlang der Linie III-III von Figur 2.

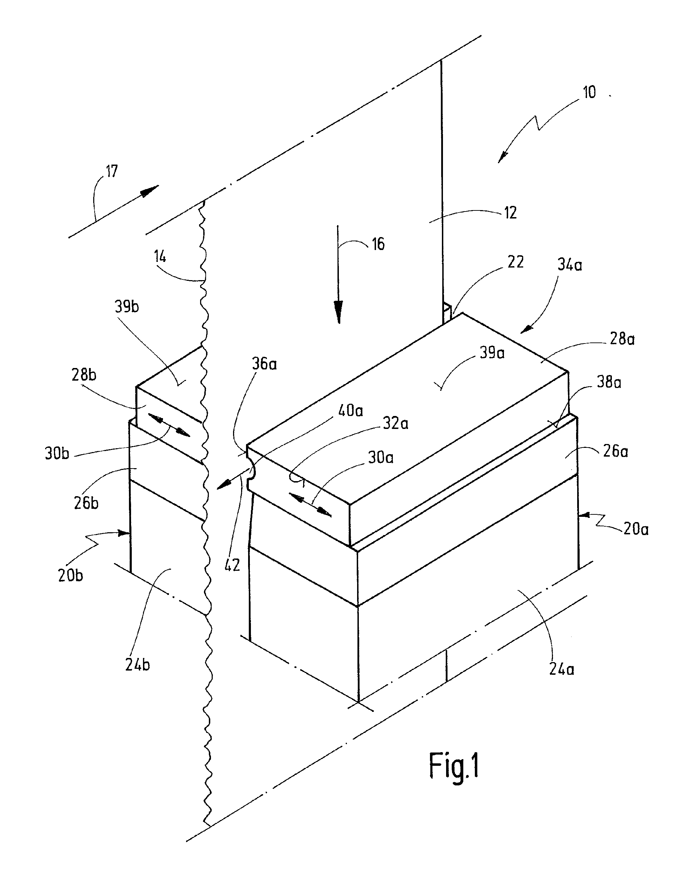

In Figur 1 bezeichnet 10 eine Bandsäge, wie sie vorzugsweise in Sägewerken zum Aufteilen von Baumstämmen in Holzerzeugnisse wie Bretter oder Bohlen oder zum weiteren Zersägen derartiger Holzerzeugnisse verwendet wird. Die üblichen Bestandteile der Bandsäge 10, nämlich die obere und die untere Führungsrolle, der Antrieb und der Sägetisch, sind in Figur 1 der Übersichtlichkeit wegen nicht dargestellt und im Übrigen dem Fachmann bekannt. Bandsägen dieser Art sind typischerweise mehrere Meter hoch, beispielsweise 4 m. Insoweit darf auf den auf die Anmelderin zurückgehenden Stand der Technik verwiesen werden, beispielsweise die bereits genannte DE 10 2008 018 443 A1 oder die DE 10 2007 005 581 A1.

Die Bandsäge 10 weist ein Bandsägeblatt 12 auf, das im dargestellten Beispiel an seiner Vorderseite mit Zähnen 14 versehen ist, aber auch beidseitig gezahnt ausgeführt sein kann. Mit einem Pfeil 16 ist die Laufrichtung des Bandsägeblatts 12 bezeichnet, in Figur 1 also von oben nach unten. Das Bandsägeblatt 12 ist für die erwähnte Anwendung in Sägewerken beispielsweise 10 m lang, 25 cm breit und 0,2 cm dick und läuft mit einer Geschwindigkeit von vorzugsweise 40 bis 80 m/s. Der nicht dargestellte Sägetisch der Bandsäge 10 befindet sich in der Darstellung von Figur 1 oberhalb der Zeichnung. Auf diesem Sägetisch wird ein Sägegut aus Holz, insbesondere ein Baumstamm, in einer mit einem Pfeil 17 gezeigten Förderrichtung, also von links nach rechts, den Zähnen 14 zugeführt. Dies bedeutet, dass das Bandsägeblatt 12 von oben nach unten Späne aus dem Sägegut mitführt.

Um das Bandsägeblatt 12 im Raum zu führen, sind beidseits Führungselemente 20a, 20b vorgesehen. In den Figuren sind die Bezugszeichen der jeweils rechts vom Bandsägeblatt 12 befindlichen Elemente mit dem Zusatz "a" und die der links befindlichen Elemente mit dem Zusatz "b" versehen. Die Anordnung ist im Wesentlichen symmetrisch, so dass zu jedem Element mit dem Zusatz "a" ein symmetrisch angeordnetes Element mit dem Zusatz "b" existiert, auch wenn dies der Übersichtlichkeit halber in der Zeichnung nicht dargestellt ist.

Eine Führung des Bandsägeblatts 12 auf dessen Rückseite ist im Gegensatz zu Metallbandsägen nicht erforderlich. Holz ist als Werkstoff wesentlich weicher als Metall, Keramik oder dgl. Die Vorschubkraft des Bandsägeblatts 12 gegen das Sägegut in Richtung des Pfeils 17 ist daher wesentlich geringer als im Fall einer Metallbandsäge. Die Führung des Bandsägeblatts 12 in Vorschubrichtung wird bei der vorliegenden Bandsäge 10 in bekannter Weise dadurch bewirkt, dass die das Bandsägeblatt 12 führenden und antreibenden Rollen an ihrem Umfang ballig ausgebildet sind. Dadurch wird selbst bei sehr großem Sägegut, insbesondere dicken Baumstämmen, erreicht, dass das Bandsägeblatt 12 beim Sägen um nicht mehr als typischerweise 1 mm in Vorschubrichtung ausweicht.

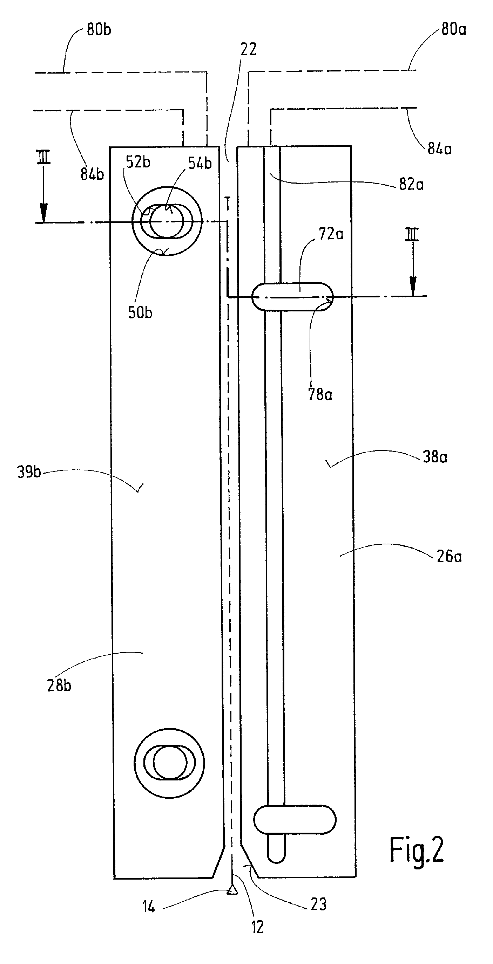

Die Führungselemente 10a, 20b bilden zwischen sich einen schmalen Luftspalt 22, durch den das Bandsägeblatt 12 läuft. Der Luftspalt 22 läuft zur Vorderseite, also dort, wo die Zähne 14 durchlaufen, in einer trapezförmigen Erweiterung 23 aus, wie aus Figur 2 ersichtlich.

Die Führungselemente 20a, 20b sind bevorzugt als magnetische Führungselemente ausgebildet, wie sie dem Fachmann beispielsweise aus dem weiter oben zitierten Stand der Technik bekannt sind, auf den verwiesen werden darf.

Die in den Figuren dargestellten Führungselemente 20a, 20b weisen unten ein Gehäuse 24a, 24b auf, das nur abgebrochen dargestellt ist. Es enthält im bevorzugten Ausführungsbeispiel die magnetischen Elemente und ist raumfest angeordnet. Auf den Gehäusen 24a, 24b ist jeweils eine Leiste 26a, 26b fest angeordnet, insbesondere aufgeschraubt. Auf den Leisten 26a, 26b wiederum befinden sich Dichtleisten 28a, 28b. Diese sind auf den Leisten 26a, 26b beweglich angeordnet, und zwar in einer mit Pfeilen 30a, 30b gezeigten Richtung jeweils quer zur Laufrichtung 16 und zur Förderrichtung 17. Die Richtungen bzw. Pfeile 16 - 17 - 30a, 30b bilden somit die Achsen eines kartesischen Koordinatensystems. Die in den Figuren ersichtlichen Abmessungen und Größenverhältnisse sind nur beispielhaft zu verstehen und schränken die Erfindung nicht ein. So sind beispielsweise in Figur 1 die Dichtleisten 28a, 28b in Richtung der Pfeile 30a, 30b etwas schmaler und in Figur 2 etwas breiter ausgebildet, ohne dass dies Bedeutung für die Erfindung hat. Die Dichtleisten bestehen vorzugsweise aus einem weichen Metall (beispielsweise Kupfer, Messing, Bronze), aber auch der Einsatz von Kunststoffen ist denkbar. Im Gegensatz zu den eingangs erwähnten elastischen Abstreifern des Standes der Technik (DE 10 2008 018 443 A1) sind die Dichtleisten 28a, 28b vorzugsweise selbst nicht elastisch ausgebildet. Die federnde Anlagekraft wird vielmehr durch separate Mittel aufgebracht, wie anhand der Figuren 2 und 3 noch erläutert werden wird.

Mit 32a, 32b sind die Vorderseiten der Dichtleisten 28a, 28b bezeichnet, mit 34a die Rückseiten und mit 36a die zum Bandsägeblatt 12 weisenden Stirnseiten. 38a und 38b bezeichnen die oberen Oberflächen der Leisten 26a, 26b, auf denen die Dichtleisten 28a, 28b aufliegen. Die oberen Oberflächen der Dichtleisten 28a, 28b sind mit 39a, 39b bezeichnet.

Wie aus den Figuren 1 und 3 erkennbar ist, befindet sich in den Stirnseiten 36a der Dichtleisten 28a, 28b eine halbzylindrische Ausnehmung 40a, durch die hindurch zum Ausblasen von Spänen, die nicht von den Dichtleisten 28a, 28b erfasst wurden, ein Druckmedium in einer zu den Zähnen 14 gerichteten Strömung, also von hinten nach vorne, fließen kann, wie in Figur 1 mit einem Pfeil 42 angedeutet. Diese Ausblaseinrichtung ist bevorzugt, aber nicht zwingend erforderlich.

In Figur 2 zeigt die linke Hälfte eine Draufsicht auf die Oberfläche 39b der Dichtleiste 28b und die rechte Hälfte eine Draufsicht auf die Oberfläche 38a der Leiste 26a. Aus der linken Hälfte von Figur 2 in Verbindung mit der linken Hälfte von Figur 3 wird die lose Befestigung der Dichtleisten 28b auf den Leisten 26b deutlich.

In die Dichtleiste 28b ist eine Stufen-Durchgangsbohrung eingebracht, die aus einer oberen, zylindrischen Bohrung 50b und einem unteren Langloch 52b besteht. Dessen Längsachse liegt in Richtung der Pfeile 30a, 30b, also in Verschieberichtung der Dichtleisten 28a, 28b. In der Leiste 26b ist unterhalb der Stufen-Durchgangsbohrung eine Gewindebohrung 54b angebracht.

Zur beweglichen Verbindung der Dichtleiste 28b mit der Leiste 26b dient eine Schraube 60b. Die Schraube 60b ist eine Inbus-Schraube mit einem Kopf 62b, einem zylindrischen Abschnitt 64b kleineren Durchmessers sowie einem Gewindeabschnitt 66b noch kleineren Durchmessers. Die Anordnung ist dabei so getroffen, dass die Schraube 60b mit ihrem Gewindeabschnitt 66b in die Gewindebohrung 54b eingeschraubt wird, bis der zylindrische Abschnitt 64b auf der Oberfläche 38b der Leiste 26b aufsetzt. Der zylindrische Abschnitt 64b der Schraube 60b ist mit seinem Durchmesser so dimensioniert, dass er in Richtung des Pfeils 30b in dem Langloch 52b geführt werden kann. Die Höhe des zylindrischen Abschnitts 64b ist so bemessen, dass der Kopf 62b der Schraube 60b sich geringfügig oberhalb eines Bodens 68b der zylindrischen Bohrung 50b befindet, wenn die Schraube 60b fest eingeschraubt ist. Dadurch wird die Dichtleiste 28b zwischen dem Kopf 62b und der Oberfläche 38b eng geführt.

Es versteht sich, dass die vorstehend beschriebene Befestigung auf beiden Seiten der Anordnung von Figur 2 vorhanden ist und dies vorzugsweise jeweils mehrfach, beispielsweise zwei- oder dreimal.

In der jeweils rechten Hälfte der Figuren 2 und 3 ist erkennbar, dass die Dichtleiste 26 an ihrer Unterseite und die Leiste 26a an ihrer Oberseite jeweils mit einem Langloch 70a bzw. 72a versehen sind. Die Langlöcher 70a und 72a sind in Richtung des Pfeils 30a etwas versetzt, wie deutlich in Figur 3, rechte Hälfte, zu sehen ist. In den von den übereinander liegenden Langlöchern 70a und 72a gebildeten Hohlraum ist eine Feder 74a, vorzugsweise eine Druckfeder, eingelegt. Die Feder 74a stützt sich in der Darstellung von Figur 3 an einer linken Stirnseite 76a des oberen Langlochs 70a sowie an einer rechten Stirnseite 78a des unteren Langlochs 72a ab.

Die Anordnung ist dabei so getroffen, dass sich die Dichtleiste 28a mit ihrer Stirnseite 36a elastisch an das Bandsägeblatt 12 anlegt, und zwar mit einer Kraft, die durch die Federkonstante der Feder 74a sowie den jeweiligen Abstand zwischen den Stirnseiten 76a und 78a bestimmt ist. Wenn das Bandsägeblatt 12 seitlich, also in Richtung der Pfeile 30a, 30b, ausweicht, sei es wegen einer Unregelmäßigkeit im Sägegut, sei es wegen einer durch die Führungen ausgeübten Stellkraft, dann folgen die Dichtleisten 28a, 28b dieser seitlichen Bewegung selbsttätig. In der Praxis liegt das seitliche Spiel bei etwa + 3 mm.

In Figur 2 sind oben, also auf der von den Zähnen abgewandten Rückseite, erste Druckluftanschlüsse 80a, 80b zu erkennen. Diese sind an die halbzylindrischen Ausnehmungen 40a angeschlossen und bewirken, dass Späne aus dem Bereich der Stirnflächen 36a nach vorne ausgeblasen werden, wie dies an sich bekannt ist.

Ferner erkennt man in den rechten Hälften der Figuren 2 und 3, dass in die Oberfläche 38a der Leiste 26a ein von hinten nach vorne laufender halbzylindrischer Kanal 82a eingearbeitet ist. Dieser und der nicht dargestellte Kanal auf der linken Seite sind mit zweiten Druckluftanschlüssen 82a, 82b verbunden. Die zugeführte Druckluft wird mittels des Kanals 82a über die gesamte Oberfläche 38a verteilt. Sie bildet dadurch einerseits ein Luftkissen und damit eine reibungsarme Lagerung der Dichtleiste 28a auf der Leiste 26a und sorgt andererseits dafür, dass keine Späne oder andere Partikel, beispielsweise Staub, zwischen die Dichtleiste 28a und die Leiste 26a gelangen können, die sich negativ auf die Beweglichkeit der Dichtleiste 28a auswirken könnten. Die Druckluft dient mithin sowohl als Lagerluft als auch als Spülluft.

Es versteht sich auch hier, dass das vorstehend beschriebene Feder- und Druckluftsystem auf beiden Seiten der Anordnung von Figur 2 vorhanden ist und dass die Federn 74a vorzugsweise jeweils mehrfach, beispielsweise zweimal, vorgesehen sein können.

Wenn vorstehend von "Druckluft" die Rede war, so ist dies nur beispielhaft zu verstehen, weil selbstverständlich auch andere Druckmedien verwendet werden können.

## Patentansprüche

1. Bandsäge zum Aufteilen von Baumstämmen in Holzerzeugnisse, mit einem Bandsägeblatt (12) und einer Führung für das Bandsägeblatt (12), bei der mindestens zwei magnetische Führungselemente (20a, 20b) das Bandsägeblatt (12) in einem Zwischenraum zwischen sich einschließen und mit jeweils an den Führungselementen (20a, 20b) angeordneten und am Bandsägeblatt (12) anliegenden Abstreifern, **dadurch gekennzeichnet, dass** die Abstreifer als Dichtleisten (28a, 28b) ausgebildet sind, die in einer Richtung (30a, 30b) quer zur Laufrichtung (16) und quer zur Förderrichtung (17) eines von der Bandsäge (10) zu sägenden Sägeguts beweglich an den Führungselementen (20a, 20b) angeordnet sind.

2. Bandsäge nach Anspruch 1, **dadurch gekennzeichnet, dass** an den Zwischenraum eine Ausblaseinrichtung angeschlossen ist.

3. Bandsäge nach Anspruch 1 oder 2, **dadurch gekennzeichnet, dass** die Dichtleisten (28a, 28b) mittels Federn (74a) elastisch zwischen den Führungselementen (20a, 20b) und dem Bandsägeblatt (12) eingespannt sind.

4. Bandsäge nach einem oder mehreren der Ansprüche 1 bis 3, **dadurch gekennzeichnet, dass** die Dichtleisten (28a, 28b) flächig und gleitend auf Oberflächen (38a, 38b) der Führungselemente (20a, 20b) aufliegen.

5. Bandsäge nach Anspruch 4, **dadurch gekennzeichnet, dass** die Oberflächen (28a, 28b) von mit einem Gehäuse (24a, 24b) der Führungselemente (20a, 20b) fest verbundenen Leisten (26a, 26b) gebildet werden.

6. Bandsäge nach Anspruch 4 oder 5, **dadurch gekennzeichnet, dass** die Führungselemente (20a, 20b) mit ersten Mitteln zum Einleiten eines Druckmediums zwischen die Dichtleisten (28a, 28b) und die Oberflächen (38a, 38b) versehen sind.

7. Bandsäge nach Anspruch 6, **dadurch gekennzeichnet, dass** die Mittels einen nach oben offenen Kanal (82a) in den Oberflächen (38a, 38b) aufweisen.

8. Bandsäge nach Anspruch 6 oder 7, **dadurch gekennzeichnet, dass** die ersten Mittel an eine von Zähnen (14) des Bandsägeblatts (12) abgewandte Rückseite (34a) der Führungselemente (20a, 20b) angeschlossen sind.

9. Bandsäge nach einem oder mehreren der Ansprüche 6 bis 8, **dadurch gekennzeichnet, dass** das Druckmedium Druckluft ist.

10. Bandsäge nach einem oder mehreren der Ansprüche 1 bis 9, **dadurch gekennzeichnet, dass** die Dichtleisten (28a, 28b) mit flächigen Stirnseiten (36a) an dem Bandsägeblatt anliegen, dass die Stirnseiten (36a) mindestens eine in Förderrichtung (17) verlaufende Ausnehmung (40a) aufweisen und dass zweite Mittel zum Einleiten eines Druckmediums an die Ausnehmungen vorgesehen sind.

11. Bandsäge nach Anspruch 10, **dadurch gekennzeichnet, dass** die zweiten Mittel an eine von Zähnen (14) des Bandsägeblatts (12) abgewandte Rückseite (34a) der Führungselemente (20a, 20b) angeschlossen sind.

12. Bandsäge nach Anspruch 10 oder 11, **dadurch gekennzeichnet, dass** das Druckmedium Druckluft ist.

## Claims

1. A band saw for dividing logs into wood products, comprising a band saw blade (12) and a guiding for the band saw blade (12), in which at least two magnetic guiding elements (20a, 20b) encompass the band saw blade (12) within a space between them, and further comprising wipers arranged each on the guiding elements (20a, 20b) and lying against the band saw blade, **characterized in that** the wipers are configured as sealing rails (28a, 28b) arranged movably on the guiding elements (20a, 20b) in a direction (30a, 30b) transversely to the running direction (16) and transversely to the conveying direction (17) of a sawing item to be sawn by the band saw (10).

2. The band saw of claim 1, **characterized in that** a blowing-out device is connected to the space.

3. The band saw of claim 1 or 2, **characterized in that** the sealing rails (28a, 28b) are tensed elastically by means of springs (74a) between the guiding elements (20a, 20b) and the band saw blade (12).

4. The band saw of one or more of claims 1 to 3, **characterized in that** the sealing rails (28a, 28b) lie against surfaces (38a, 38b) of the guiding elements (20a, 20b) in a planar and sliding manner.

5. The band saw of claim 4, **characterized in that** the surfaces (28a, 28b) are configured by rails (26a, 26b) rigidly connected to a housing (24a, 24b) of the guiding elements (20a, 20b)

6. The band saw of claim 5 or 6, **characterized in that** the guiding elements (20a, 20b) are provided with first means for feeding a pressurized medium between the guiding rails (28a, 28b) and the surfaces (38a, 38b).

7. The band saw of claim 6, **characterized in that** the means comprise an upwardly open channel (82a) within the surfaces (38a, 38b).

8. The band saw of claim 6 or 7, **characterized in that** the first means are connected to a rear side (34a) of the guiding elements (20a, 20b) facing away from teeth (14) of the band saw blade (12).

9. The band saw of one or more of claims 6 to 8, **characterized in that** the pressurized medium is air.

10. The band saw of one or more of claims 1 to 9, **characterized in that** the sealing rails (28a, 28b) lie against the band saw blade (12) with planar top sides (36a), that the top sides (36a) are provided with at least one recess (40a) extending along the conveying direction (17), and that second means are provided for feeding a pressurized medium into the recesses (40a).

11. The band saw of claim 10, **characterized in that** the second means are connected to a rear side (34a) of the guiding elements (20a, 20b) facing away from teeth (14) of the band saw blade (12).

12. The band saw of claim 11, **characterized in that** the pressurized medium is air.

## Revendications

1. Scie à ruban pour tronçonner des billes de bois en produits en bois, comprenant une lame de scie à ruban (12) et un guidage pour la lame de scie à ruban (12), au moins deux éléments de guidage magnétiques (20a, 20b) incluant entre eux la lame de scie à ruban (12) dans un espace intermédiaire et comprenant à chaque fois des racloirs disposés au niveau des éléments de guidage (20a, 20b) et s'appliquant contre la lame de scie à ruban (12), **caractérisée en ce que** les racloirs sont réalisés sous forme de barres d'étanchéité (28a, 28b) qui sont disposées de manière déplaçable au niveau des éléments de guidage (20a, 20b) dans une direction (30a, 30b) transversalement à la direction d'avance (16) et transversalement à la direction de transport (17) d'un produit devant être scié par la scie à ruban (10).

2. Scie à ruban selon la revendication 1, **caractérisée en ce qu'**un dispositif de soufflage est raccordé à l'espace intermédiaire.

3. Scie à ruban selon la revendication 1 ou 2, **caractérisée en ce que** les barres d'étanchéité (28a, 28b) sont serrées au moyen de ressorts (74a) élastiquement entre les éléments de guidage (20a, 20b) et la lame de scie à ruban (12).

4. Scie à ruban selon l'une quelconque ou plusieurs des revendications 1 à 3, **caractérisée en ce que** les barres d'étanchéité (28a, 28b) s'appliquent à plat et de manière glissante sur des surfaces (38a, 38b) des éléments de guidage (20a, 20b).

5. Scie à ruban selon la revendication 4, **caractérisée en ce que** les surfaces (28a, 28b) sont formées par des barres (26a, 26b) connectées fixement à un boîtier (24a, 24b) des éléments de guidage (20a, 20b).

6. Scie à ruban selon la revendication 4 ou 5, **caractérisée en ce que** les éléments de guidage (20a, 20b) sont pourvus de premiers moyens pour introduire un milieu sous pression entre les barres d'étanchéité (28a, 28b) et les surfaces (38a, 38b).

7. Scie à ruban selon la revendication 6, **caractérisée en ce que** les moyens présentent un canal ouvert vers le haut (82a) dans les surfaces (38a, 38b).

8. Scie à ruban selon la revendication 6 ou 7, **caractérisée en ce que** les premiers moyens sont raccordés à un côté arrière (34a) des éléments de guidage (20a, 20b) opposé à des dents (14) de la lame de scie à ruban (12).

9. Scie à ruban selon l'une quelconque ou plusieurs des revendications 6 à 8, **caractérisée en ce que** le milieu sous pression est de l'air sous pression.

10. Scie à ruban selon l'une quelconque ou plusieurs des revendications 1 à 9, **caractérisée en ce que** les barres d'étanchéité (28a, 28b) s'appliquent avec des côtés frontaux plats (36a) contre la lame de scie à ruban, **en ce que** les côtés frontaux (36a) présentent au moins un évidement (40a) s'étendant dans la direction de transport (17) et **en ce que** des deuxièmes moyens sont prévus pour introduire un milieu sous pression au niveau des évidements.

11. Scie à ruban selon la revendication 10, **caractérisée en ce que** les deuxièmes moyens sont raccordés à un côté arrière (34a) des éléments de guidage (20a, 20b) opposé à des dents (14) de la lame de scie à ruban (12).

12. Scie à ruban selon la revendication 10 ou 11, **caractérisée en ce que** le milieu sous pression est de l'air sous pression.
